(19) Europäisches Patentamt
European Patent Office
Office européen des brevets

(11) **EP 3 011 619 B1**

(12) **EUROPEAN PATENT SPECIFICATION**

(45) Date of publication and mention
of the grant of the patent:
**01.08.2018 Bulletin 2018/31**

(51) Int Cl.:
*H01M 4/52* *(2010.01)*      *H01M 4/50* *(2010.01)*
*H01M 4/136* *(2010.01)*     *H01M 4/133* *(2010.01)*
*H01M 4/02* *(2006.01)*      *H01M 4/62* *(2006.01)*
*H01M 4/58* *(2010.01)*      *H01M 4/525* *(2010.01)*
*H01M 4/505* *(2010.01)*     *H01M 4/485* *(2010.01)*
*H01M 4/36* *(2006.01)*      *H01M 4/1391* *(2010.01)*
*H01M 4/131* *(2010.01)*     *H01M 4/04* *(2006.01)*
*H01M 10/0525* *(2010.01)*   *H01M 10/052* *(2010.01)*

(21) Application number: **14739629.5**

(22) Date of filing: **19.06.2014**

(86) International application number:
**PCT/US2014/043182**

(87) International publication number:
**WO 2014/205215 (24.12.2014 Gazette 2014/52)**

(54) **ACTIVE MATERIALS FOR LITHIUM ION BATTERIES**

AKTIVMATERIALIEN FÜR LITHIUM-IONEN-BATTERIEN

MATÉRIAUX ACTIFS POUR BATTERIES À ION LITHIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2013 US 201361837970 P
21.06.2013 US 201361837976 P**

(43) Date of publication of application:
**27.04.2016 Bulletin 2016/17**

(73) Proprietor: **Cabot Corporation
Boston MA 02210-2019 (US)**

(72) Inventors:
• **OLJACA, Miodrag**
  **Billerica, MA 01821 (US)**
• **BLIZANAC, Berislav**
  **Billerica, MA 01821 (US)**
• **DUPASQUIER, Aurelien, L.**
  **Billerica, MA 01821 (US)**
• **WALL, Ryan, C.**
  **Albuquerque, NM 87114 (US)**
• **SUSZKO, Arek**
  **Albuquerque, NM 87122 (US)**
• **KOEHLERT, Ken**
  **Billerica, MA 01821 (US)**

(74) Representative: **Grünecker Patent- und
Rechtsanwälte
PartG mbB
Leopoldstraße 4
80802 München (DE)**

(56) References cited:
**EP-A2- 2 372 819       WO-A1-2006/091019
US-A1- 2006 257 745    US-A1- 2006 263 691
US-A1- 2007 224 505    US-A1- 2010 062 339**

**Description**

**RELATED APPLICATIONS**

**FIELD OF THE INVENTION**

Disclosed herein are cathode formulations comprising electroactive active materials and conductive carbons, for use in lithium ion batteries.

**BACKGROUND**

The ever-increasing functionality of electronic devices, requiring more processing power, higher resolution screens, more RAM memory, wireless capabilities, etc., are driving higher and higher demand for power. Miniaturization of these devices drive an even greater requirement for energy density of the energy storage systems. Currently, the energy storage of choice is the lithium ion battery, technology, which displays the best energy and power density. However, even with Li-ion battery technology, it has been increasingly more difficult to keep up with trends in consumer electronic devices for more power and energy in more compact size. On the other end of the application spectrum in terms of battery size are electric and hybrid electric applications, which similarly require relatively high power and energy in compact size and limited volume.

Accordingly, there remains a need for continued development of new cathode formulations.

**SUMMARY**

One embodiment provides a cathode formulation comprising:

a lithium ion-based electroactive material having a $D_{50}$ ranging from 1 $\mu$m to 6 $\mu$m; and
carbon black having BET surface area ranging from 130 to 700 $m^2$/g and an OAN ranging from 150 mL/100 g to 300 mL/100 g.

Another embodiment provides a cathode paste containing particles comprising a lithium ion-based electroactive material and a carbon black, wherein the paste further comprises:

a binder; and

a solvent,

wherein the lithium ion-based electroactive material has a $D_{50}$ ranging from 1 $\mu$m to 6 $\mu$m; and

wherein the carbon black has a BET surface area ranging from 130 to 700 $m^2$/g and an OAN ranging from 150 mL/100 g to 300 mL/100 g.

Another embodiment provides a method of making a cathode, comprising:

combining particles comprising carbon black, a lithium ion-based electroactive material, and a binder in the presence of a solvent to produce a paste;

depositing the paste onto a substrate; and

forming the cathode,

wherein the electroactive material has a $D_{50}$ ranging from 1 $\mu$m to 6 $\mu$m, and the carbon black has a BET surface area ranging from 130 to 700 $m^2$/g and an OAN ranging from 150 mL/100 g to 300 mL/100 g.

Another embodiment provides a cathode formulation comprising:

a first lithium ion-based electroactive material having a particle size distribution of 1 $\mu$m $\leq D_{50} \leq$ 5 $\mu$m; and

a second lithium ion-based electroactive material having a particle size distribution of 5 $\mu$m $< D_{50} \leq$ 15 $\mu$m;

wherein the maximum pulse power in W/kg and W/L of the mixture is higher than maximum pulse power of the first or second electroactive material individually.

Another embodiment provides a cathode formulation comprising:

a first lithium ion-based electroactive material having a particle size distribution of 1 $\mu$m $\leq$ D$_{50}$ $\leq$ 5 $\mu$m; and

a second lithium ion-based electroactive material having a particle size distribution of 5 $\mu$m < D$_{50}$ $\leq$ 15 $\mu$m;

wherein the energy density in Wh/kg and Wh/L of the mixture is higher than energy density of the first or second electroactive material individually.

Another embodiment provides a cathode formulation comprising:

a first lithium ion-based electroactive material having a particle size distribution of 1 $\mu$m $\leq$ D$_{50}$ $\leq$ 5 $\mu$m;
a second lithium ion-based electroactive material having a particle size distribution of 5 $\mu$m < D$_{50}$ $\leq$ 15 $\mu$m; and
carbon black having BET surface area ranging from 130 to 700 m$^2$/g.

Another embodiment provides a cathode paste containing particles comprising a first lithium ion-based electroactive material, a second lithium ion-based electroactive material, and a carbon black, wherein the paste further comprises:

a binder; and

a solvent,
wherein:

the first lithium ion-based electroactive material has a particle size distribution of 1 $\mu$m $\leq$ D$_{50}$ $\leq$ 5 $\mu$m;
the second lithium ion-based electroactive material has a particle size distribution of 5 $\mu$m < D$_{50}$ $\leq$ 15 $\mu$m; and
the carbon black has BET surface area ranging from 130 to 700 m$^2$/g.

Another embodiment provides a method of making a cathode, comprising:

combining particles comprising carbon black, a lithium ion-based electroactive material, and a binder in the presence of a solvent to produce a paste;

depositing the paste onto a substrate; and

forming the cathode,

wherein the lithium ion-based electroactive material comprises:

a first lithium ion-based electroactive material having a particle size distribution of 1 $\mu$m $\leq$ D$_{50}$ $\leq$ 5 $\mu$m; and

a second lithium ion-based electroactive material having a particle size distribution of 5 $\mu$m < D$_{50}$ $\leq$ 15 $\mu$m.

**BRIEF DESCRIPTION OF THE DRAWING(S)**

FIG. 1 is a schematic two dimensional projection of simple cubic packing of spheres of first and second electroactive particles;

FIG. 2 is a plot of specific capacity at 5C as a function of carbon black surface area in a cathode formulation comprising 3 wt% of various carbon black samples;

FIG. 3 schematically depicts the reactive spray process and the formation of a solid particle from an initial droplet;

FIG. 4 shows XRD patterns for the resulting powders prepared by reactive spray technology (RST) at different reactor temperatures using ultrasonic aerosol generation and in-line electrical heat source;

FIG. 5A is a plot of primary crystal size as a function of calcination time;

FIG. 5B is a plot of capacity at C/5 rate as a function of primary crystal size;

FIG. 6 is a series of SEM images at different magnification of material after the spray pyrolysis step (top, 700°C reactor temperature) and after additional calcination (bottom, 750°C for 4 hours in air);

FIG. 7 shows XRD patterns of $LiCO_{0.33}Mn_{0.33}Ni_{0.33}O_2$: a) as sprayed at 700°C, and b) after calcination at 900°C for 2 hours in air;

FIG. 8A is a plot of discharge capacity versus C rate for electrodes containing small and large size active materials, as described in Example 2;

FIG. 8B is a plot of voltage versus discharge capacity, as described in Example 2;

FIG. 9 shows first C/5 charge-discharge voltage profiles and their derivatives (inset) of the small particle (solid lines) and large particle active materials (dotted lines);

FIG. 10 shows (a) discharge curves at different rates for the small particle and large particle materials, and (b) specific capacity as a function of discharge rate (C-rate);

FIGs. 11A and 11B show gravimetric (10A) and volumetric (10B) Ragone plots of energy vs. power for the large and small particle materials;

FIG. 12 shows electrochemical impedance spectra of formed and discharged coin-cells with either large or small sized particles;

FIGs. 13A and 13B are plots of maximum pulse power versus State of Discharge (SOD) equal to 1 - SOC (State of Charge), both mass (FIG. 13A, gravimetric) and volume (FIG. 13B, volumetric) normalized;

FIG. 14 shows XRD spectra of the spinel annealed at various temperatures (left) and corresponding SEM images (right);

FIG. 15 shows XRD spectra of the as-sprayed, layer-layer powders and after 900°C/4h calcination (left), corresponding SEM images before and after 900°C/4h calcination (middle), and particle size distribution (right);

FIG. 16A is a voltage vs. capacity plot for the layer-layer material;

FIG. 16B is a voltage vs. capacity plot for the spinel;

FIG. 16C is a voltage vs. capacity plot for the layer-layer material;

FIG. 16D is an energy versus power plot for the layer-layer material and the blend of spinel/layer-layer.

FIG. 17A is a bar plot showing composite electrode density for the small and large particle active materials;

FIG. 17B is a plot of volumetric energy and power density of electrodes comprising small and large particle active materials;

FIG. 18 is a plot of capacity versus cycle number for large and small particle active materials;

FIG. 19 is a plot of electrode density as a function of wt% small particle active material in a blend of small and large particle materials, after full calendaring;

FIGs. 20A and 20B show mass normalized (FIG. 20A) and volume normalized (FIG. 20B) Ragone plots for pure small and large particle cathode formulations and their blends;

FIGs. 21A and 21B show plots of mass normalized (FIG. 21A) and volume normalized (FIG. 21B) maximum discharge power obtained from pulsed HPPC tests as a function of State of Charge (SOC);

FIG. 22 is a plot of coin-cell capacity (% of initial) as a function of cycle number for large and small particle active materials and their blends;

## DETAILED DESCRIPTION

Many battery applications require batteries that provide high power and energy. In lithium ion battery technology, power and energy density are, however, typically optimized in two different ways. High energy density is typically achieved by building thick electrode layers, such as by increasing the area loading of active materials to minimize the weight and volume contribution of inactive components such as separators, current collector foils, etc. To further maximize the density of the composite cathodes, particles of the active phase are typically large, e.g., approximately 10-25 $\mu$m in size. Such large particles have a low $N_2$ BET surface area of approximately 0.3 m$^2$/g. This morphology is suitable for high energy design and long cycle life, as a result of good packing density in the composite electrode layer and low surface area on which detrimental side reactions could take place.

Commercially available "small" active particles have a size of approximately 2-4.5 $\mu$m, giving correspondingly higher $N_2$ BET surface areas approximately of 2.5 m$^2$/g. This surface area is almost 10 times higher than the surface area of the "large" particle size materials. Consequently, packing density in the electrode layer is lower for the small particle materials. Moreover, cycle life, e.g., at higher temperatures, is not as good as with active cathode materials having low $N_2$ BET surface area. Thus, for most of the mobile/portable applications that require high energy density in small and restricted volumes, batteries comprising large particle active materials having correspondingly low $N_2$ BET surface areas are commonly employed.

Although large particles provide the advantages stated above, it has been observed that the use of large particles in thick electrode layers result in mass transport limitations in both the electrolyte and solid particle phases. For lithium ion batteries, the process of storing and releasing energy during the battery charge and discharge involves diffusion of Li ions inside the solid active material particles. Thus, the slower mobility of lithium in large particle size materials results in lower values of discharge rate (power). Considering that solid state diffusion is typically much slower than diffusion of Li+ ions in the electrolyte phase, active materials of a small particle size are better suited for power demanding applications.

Disclosed herein are cathode formulations comprising a lithium ion-based electroactive material having a $D_{50}$ ranging from 1 $\mu$m to 6 $\mu$m, and carbon black having BET surface area ranging from 130 to 700 m$^2$/g and an OAN ranging from 150 mL/100 g to 300 mL/100 g. The disclosed cathode formulations couple active materials with sufficient lithium ion mobility for high energy density applications with conductive carbon blacks that help achieve maximum performance while maintaining sufficiently low surface area for suitable handling during manufacturing. In one embodiment, the electroactive material has a $D_{50}$ ranging from 1 $\mu$m to 6 $\mu$m, such as a $D_{50}$ ranging from 1 $\mu$m to 5 $\mu$m.

In one embodiment, the electroactive material comprises a mixture of two or more materials (e.g., first and second electroactive materials), each having a $D_{50}$ ranging from 1 $\mu$m to 6 $\mu$m or from 1 $\mu$m to 5 $\mu$m, or a first electroactive material having a $D_{50}$ ranging from 1 $\mu$m to 6 $\mu$m and a second electroactive material having a $D_{50}$ ranging from 1 $\mu$m to 5 $\mu$m.

It has also been discovered, that power density and/or energy density improved upon incorporating blends. In one embodiment, the blending of small and large active cathode particles improves power density without sacrificing energy density, where a reduction often occurs due to the presence of the small particles. In one embodiment, the maximum pulse power in W/kg and W/L of the blend is higher than maximum pulse power of the first or second electroactive material individually. In another embodiment, the energy density in Wh/kg and Wh/L of the mixture is higher than energy density of the first or second electroactive material individually.

Also disclosed herein are cathode formulations comprising active materials having a bimodal particle size distribution. Another embodiment provides:

a first lithium ion-based electroactive material having a particle size distribution of 1 $\mu$m $\leq$ $D_{50}$ $\leq$ 5 $\mu$m; and

a second lithium ion-based electroactive material having a particle size distribution of 5 $\mu$m < $D_{50}$ $\leq$ 15 $\mu$m.

In one embodiment, the first electroactive material has a particle size distribution of 1 $\mu$m $\leq$ $D_{50}$ $\leq$ 5 $\mu$m, and the second electroactive material has a particle size distribution of 6 $\mu$m $\leq$ $D_{50}$ $\leq$ 15 $\mu$m. In another embodiment, the first electroactive material has a particle size distribution of 1 $\mu$m $\leq$ $D_{50}$ $\leq$ 5 $\mu$m, and the second electroactive material has a particle size distribution of 8 $\mu$m $\leq$ $D_{50}$ $\leq$ 15 $\mu$m. In another embodiment, the first electroactive material has a particle size distribution of 1 $\mu$m $\leq$ $D_{50}$ $\leq$ 5 $\mu$m, and the second electroactive material has a particle size distribution of 10 $\mu$m $\leq$ $D_{50}$ $\leq$ 15 $\mu$m.

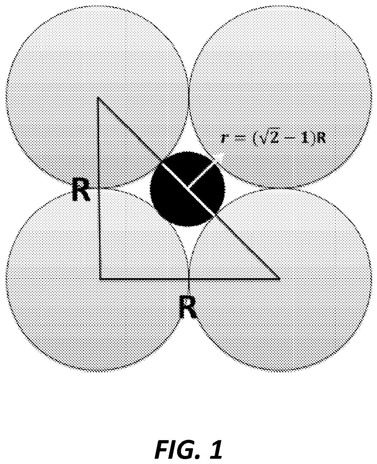

In one embodiment, the spherical radius of the second electroactive material particle is less than or equal to 0.4 the radius of the first electroactive material particle. FIG. 1 shows a two dimensional projection of a simple cubic packing of spheres. In this case, spherical particle of radius equivalent to 0.41 radius of bigger spherical particle will be able to occupy volume created by simple cubic packing of larger spheres.

In one embodiment, for co-precipitation synthesis of cathode materials, a lower size limit is less than or equal to 4-5 $\mu$m, as limited by the filtration step.

In one embodiment, the electroactive materials described herein (e.g., the first electroactive material) has a pore size of less than 15 nm, e.g., a pore size ranging from 5 nm to 15 nm, or a pore size ranging from 7 nm to 15 nm. In another embodiment, the electroactive material (e.g., the first electroactive material) has a single point adsorption total pore volume of at least 0.002 $cm^3$/g.

In addition to the electroactive component, the cathode formulations further comprise conductive additives. In the battery industry, there are at least two competing requirements for the amount of conductive additive needed: (i) high and uniform electrical conductivity to eliminate polarization effects, which may be heightened at high current densities (voltage loss = current density x cell resistance), requiring a high amount of conductive additive, and (ii) high energy density to enable a high amount of energy to be stored in as small a volume as possible (small weight), dictating that the amount of conductive additive (diluent) be as low as possible. These two antagonistic requirements presently result in necessary trade-offs between energy and power density.

Carbon blacks have primary particles (nodules) fused together into aggregates that could further be agglomerated. Parameters used to describe carbon blacks include surface area, structure, crystallinity, purity etc. The surface area generally corresponds to the size of the primary particles and their porosity - the higher the surface area, the smaller the primary particles and the aggregates and therefore more aggregates per unit weight. Higher aggregate count per unit weight increases the probability for contact between the carbon black particles themselves and between the carbon black particles and active materials, which can result in improved electrical conductivity of the electrode layer. Thus, high surface area of carbon black can be beneficial for the electrical properties of electrode layers.

However, high surface area comes with the penalty in many other areas, such as facilitated parasitic reactions, and negative impact on cycle and calendar life. Moreover, high surface area carbon blacks may also require elevated amounts of binder (an insulator), and an accompanying decrease in the amount of the active material responsible for storing energy. During manufacturing, high surface area carbon blacks are typically more difficult to disperse and can result in increased slurry viscosity. To obtain a pastable slurry, the solids loading needs to be decreased which negatively impacts the process/ manufacturing economy (solvent is expensive and never 100% recovered).

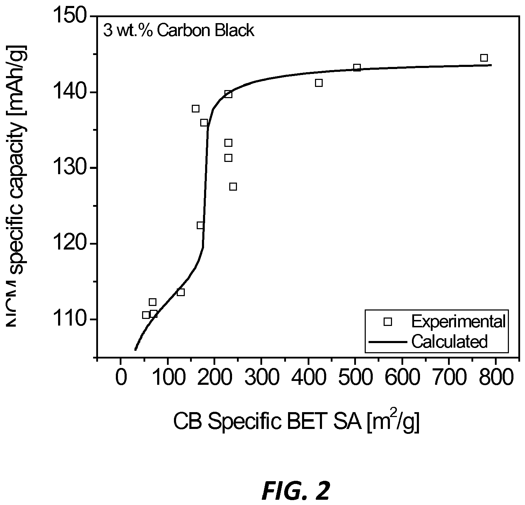

Additionally, without wishing to be bound by any theory, it is believed that in this surface area range, the battery performance as measured by capacity retention at 5C discharge correlates with the surface area of the carbon black, as demonstrated by FIG. 2. FIG. 2 is a plot of specific capacity at 5C as a function of carbon black surface area in a cathode formulation comprising 3 wt% of various carbon black samples. As can be seen in FIG. 2, the specific capacity generally increases with surface area in the surface area range of 130 to 700 $m^2$/g. The plot of FIG. 2 has the shape of a typical percolation curve in which the transition occurs in the surface area range of approximately 200-300 $m^2$/g. It can be seen that at surface area values greater than 700 $m^2$/g, the improvement in performance is negligible.

In one embodiment, the carbon black has a BET surface area ranging from 130 to 500 $m^2$/g, such as a surface area ranging from 130 to 400 $m^2$/g, from 130 to 300 $m^2$/g, from 200 to 500 $m^2$/g, from 200 to 400 $m^2$/g, or from 200 to 300 $m^2$/g. BET surface area can be determined according to ASTM-D6556.

In one embodiment, the carbon black has a structure, as defined by oil adsorption number (OAN), that indicates a lesser number of imperfections via a higher degree of graphitization. OAN can be determined according to ASTM-D2414. In one embodiment, the carbon black has an OAN of less than 250 mL/100 g, e.g., an OAN ranging from 50 to 250 mL/100 g, from 100 to 250 mL/100 g, or from 100 to 200 mL/100 g.

In one embodiment, a higher degree of graphitization can be indicated by lower surface energy values, which are typically a measure of the amount of oxygen on the surface of carbon black, and thus, its hydrophobicity. Surface energy can be measured by Dynamic Water Sorption. In one embodiment, the carbon black has a surface energy (SE) less than or equal to 10 mJ/$m^2$, e.g., less than or equal to 9 mJ/$m^2$, less than or equal to 7 mJ/$m^2$, less than or equal to 6 mJ/$m^2$, less than or equal to 5 mJ/$m^2$, less than or equal to 3 mJ/$m^2$, or less than or equal to 1 mJ/$m^2$.

In one embodiment, the carbon black has a crystallite size ($L_a$) of at least 25 Å, as determined by Raman spectroscopy, where $L_a$ is defined as 43.5 x (area of G band/area of D band). The crystallite size can give an indication of the degree of graphitization where a higher $L_a$ value correlates with a higher degree of graphitization. Raman measurements of $L_a$ were based on Gruber et al., "Raman studies of heat-treated carbon blacks," Carbon Vol. 32 (7), pp. 1377-1382, 1994, which is incorporated herein by reference. The Raman spectrum of carbon includes two major "resonance" bands at about 1340 $cm^{-1}$ and 1580 $cm^{-1}$, denoted as the "D" and "G" bands, respectively. It is generally considered that the D band is attributed to disordered $sp^2$ carbon and the G band to graphitic or "ordered" $sp^2$ carbon. Using an empirical approach, the ratio of the G/D bands and the $L_a$ measured by X-ray diffraction (XRD) are highly correlated, and regression analysis gives the empirical relationship:

$$L_a = 43.5 \times (\text{area of G band/area of D band}),$$

in which $L_a$ is calculated in Angstroms. Thus, a higher $L_a$ value corresponds to a more ordered crystalline structure.

In another embodiment, the carbon black has a crystallite size of at least 30 Å, at least 35 Å, at least 40 Å, at least 45 Å, or at least 50 Å.

In one embodiment, a higher % crystallinity (obtained from Raman measurements as a ratio of D and G bands) may also indicate a higher degree of graphitization. In one embodiment, the carbon black has a % crystallinity ($I_D/I_G$) of at least 35%, as determined by Raman spectroscopy, e.g., a % crystallinity of at least 38%, or at least 40%.

In one embodiment, the carbon black is a heat-treated carbon black. "Heat treatment" of carbon black, as used herein, generally refers to a post-treatment of a carbon black that had been previously formed by methods generally known in the art, e.g., a furnace black process. The heat treatment can occurs under inert conditions (i.e., in an atmosphere substantially devoid of oxygen), and typically occurs in a vessel other than that in which the carbon black was formed. Inert conditions include, but are not limited to, an atmosphere of inert gas, such as nitrogen, argon, and the like. In one embodiment, the heat treatment of carbon blacks under inert conditions, as described herein, is capable of reducing the number of defects, dislocations, and/or discontinuities in carbon black crystallites and/or increase the degree of graphitization.

In one embodiment, the heat treatment (e.g., under inert conditions) is performed at a temperature of at least 1000°C, at least 1200°C, at least 1400°C, at least 1500°C, at least 1700°C, or at least 2000°C. In another embodiment, the heat treatment is performed at a temperature ranging from 1000°C to 2500°C.

In one embodiment, the heat treatment (e.g., under inert conditions) is performed at a temperature of at least 1000°C, at least 1200°C, at least 1400°C, at least 1500°C, at least 1700°C, or at least 2000°C. In another embodiment, the heat treatment is performed at a temperature ranging from 1000°C to 2500°C. Heat treatment "performed at a temperature" refers to one or more temperatures ranges disclosed herein, and can involve heating at a steady temperature, or heating while ramping the temperature up or down, either continuously or stepwise.

In one embodiment, the heat treatment is performed for at least 15 minutes, e.g., at least 30 minutes, at least 1 h, at least 2 h, at least 6 h, at least 24 h, or any of these time periods up to 48 h, at one or more of the temperature ranges disclosed herein. In another embodiment, the heat treatment is performed for a time period ranging from 15 minutes to at least 24 h, e.g., from 15 minutes to 6 h, from 15 minutes to 4 h, from 30 minutes to 6 h, or from 30 minutes to 4 h.

In one embodiment, the electroactive material (e.g., a sum of the first and second electroactive materials) is present in the cathode formulation in an amount of at least 80% by weight, e.g., an amount of at least 90%, an amount ranging from 80% to 99%, or an amount ranging from 90% to 99% by weight, relative to the total weight of the cathode formulation.

For blends, in one embodiment the second electroactive material is present in an amount ranging from 10 wt% to 50 wt% by weight, relative to the total weight of the electroactive material (e.g., the sum of the first and second electroactive materials).

In one embodiment, the electroactive material is a lithium ion-based compound. Exemplary electroactive materials include those selected from at least one of:

- $LiMPO_4$, wherein M represents one or more metals selected from Fe, Mn, Co, and Ni;

- $LiM'O_2$, wherein M' represents one or more metals selected from Ni, Mn, Co, Al, Mg, Ti, V, Cr, Fe, Zr, Ga, and Si;

- $Li(M'')_2O_4$, wherein M" represents one or more metals selected from Ni, Mn, Co, Al, Mg, Ti, V, Cr, Fe, Zr, Ga, and Si (e.g., $Li[Mn(M'')]_2O_4$); and

- $Li_{1+x}(Ni_yCo_{1-y-z}Mn_z)_{1-x}O_2$, wherein x ranges from 0 to 1, y ranges from 0 to 1 and z ranges from 0 to 1.

In one embodiment, the electroactive material is selected from at least one of $LiNiO_2$; $LiNi_xAl_yO_2$ where x varies from 0.8-0.99, y varies from 0.01-0.2, and x+y=1; $LiCoO_2$; $LiMn_2O_4$; $Li_2MnO_3$; $LiNi_{0.5}Mn_{1.5}O_4$; $LiFe_xMn_yCO_zPO_4$ where x varies from 0.01-1, y varies from 0.01-1, z varies from 0.01-0.2, and x+y+z=1; $LiNi_{1-x-y}Mn_xCo_yO_2$, wherein x ranges from 0.01 to 0.99 and y ranges from 0.01 to 0.99; and layer-layer compositions containing an $Li_2MnO_3$ phase or a $LiMn_2O_3$ phase.

In one embodiment, the electroactive material is selected from at least one of $Li_2MnO_3$; $LiNi_{1-x-y}Mn_xCo_yO_2$

wherein x ranges from 0.01 to 0.99 and y ranges from 0.01 to 0.99; $LiNi_{0.5}Mn_{1.5}O_4$; $Li_{1+x}(Ni_yCo_{1-y-z}Mn_z)_{1-x}O_2$, wherein x ranges from 0 to 1, y ranges from 0 to 1 and z ranges from 0 to 1; and layer-layer compositions containing at least one of an $Li_2MnO_3$ phase and an $LiMn_2O_3$ phase.

Cathodes are the performance limiting component in Li-ion batteries because their capacity (~160 mAh/g) does not match the anode capacity (320 mAh/g for graphite). It has been discovered that the use of certain Mn rich formulations as active materials result in cathodes having a capacity approaching 280 mAh/g, and a gravimetric energy around 900 Wh/kg. However, these materials have low charge and discharge rate capability, causing them to lose their energy advantage even at moderate discharge rates of 2C. Another drawback of these materials is that they display a wide voltage swing from 4.8 to 2.0V during discharge.

Accordingly, one embodiment provides a mixture of active materials comprising: a nickel-doped Mn spinel, which has a high and flat discharge voltage around 4.5 V and a high power capability; and a layer-layer Mn rich composition, which makes it possible to increase discharge voltage and power capability. In one embodiment, the nickel-doped Mn spinel has the formula $LiNi_{0.5}Mn_{1.5}O_4$, and the layer-layer Mn rich composition contains a $Li_2MnO_3$ or a $LiMn_2O_3$ phase, and mixtures thereof.

In one embodiment, the electroactive material comprises a first electroactive material having a $D_{50}$ ranging from 1 μm to 5 μm and a second electroactive material having a $D_{50}$ ranging from 1 μm to 6 μm, wherein:

the first electroactive material has the formula $\alpha Li_2MnO_3 : (1-a)LiMO_2$, wherein $\alpha$ ranges from 0.1 to 0.9 and M is one or more metals selected from Mn, Ni, and Co; and

the second electroactive material has the formula $LiNi_{0.5}Mn_{1.5}O_4$.

In one embodiment, the cathode formulation further comprises a binder. Exemplary binder materials include but are not limited to fluorinated polymers such as poly(vinyldifluoroethylene) (PVDF), poly(vinyldifluoroethylene-co-hexafluoropropylene) (PVDF-HFP), poly(tetrafluoroethylene) (PTFE), polyimides, and water-soluble binders such as poly(ethylene) oxide, polyvinyl-alcohol (PVA), cellulose, carboxymethylcellulose (CMC), starch, hydroxypropylcellulose, regenerated cellulose, polyvinyl pyrrolidone (PVP), and copolymers and mixtures thereof. Other possible binders include polyethylene, polypropylene, ethylene-propylene-diene terpolymer (EPDM), sulfonated EPDM, styrenebutadiene rubber (SBR), and fluoro rubber and copolymers and mixtures thereof.

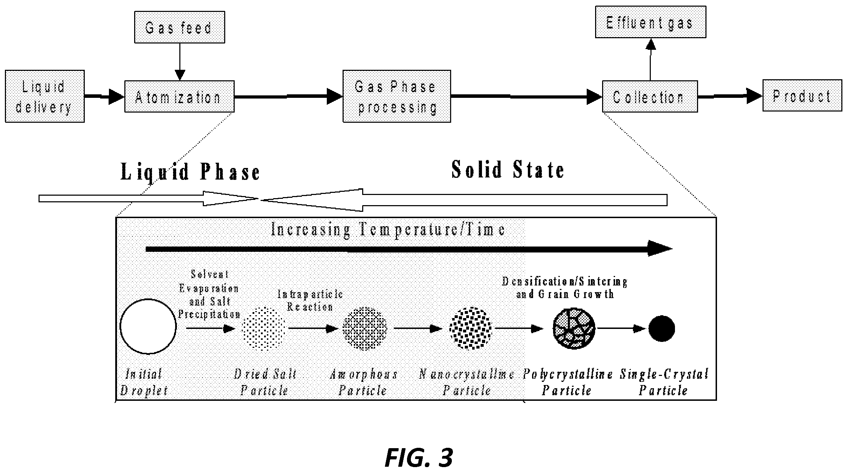

In one embodiment, the active materials are prepared by reactive spray technology (RST). In one embodiment, reactive spray technology is performed as described in U.S. Patent No. 6,770,226. Other methods for performing RST are disclosed herein. Reactive spray technology combines both liquid phase and solid state processing. FIG. 3 schematically depicts the reactive spray process and the formation of a solid particle from an initial droplet. The processing starts with a liquid formulation that contains either dissolved or suspended reagents, which act as precursors to the final product or as supports. The liquid ("liquid delivery"), together with a gas ("gas feed"), is then fed to an atomization unit where the liquid is converted into an aerosol. The gas stream containing the aerosol is then heated in a gas phase processing unit to effect the physical and chemical conversion of the droplets to the final powder. FIG. 3 shows the liquid to solid state phase change over the course of increasing temperature/time (initial droplet → dried salt particle → amorphous particle → nanocrystalline particle → polycrystalline particle → single-crystal particle). The final powder is separated from the gas stream using conventional powder collection methods ("collection"), leaving only a gaseous effluent (no liquid effluent to be disposed). The final powder microstructure ("product") and composition depends on the residence time, temperature, the reactive nature of droplet components and the composition of the gas. The physical and/or chemical evolution of the particles can be arrested at any stage by quenching of the reaction media, allowing the use of this process to produce a wide variety of materials and compositions combined with unique microstructures and morphologies.

Another embodiment provides a cathode formulation comprising, consisting essentially of, or consisting of:

a lithium ion-based electroactive material having a $D_{50}$ ranging from 1 μm to 6 μm; and

carbon black having BET surface area ranging from 130 to 700 $m^2$/g and an OAN ranging from 150 mL/100 g to 300 mL/100 g.

Another embodiment provides a cathode formulation comprising, consisting essentially of, or consisting of:

a lithium ion-based electroactive material having a $D_{50}$ ranging from 1 μm to 6 μm; and

carbon black having BET surface area ranging from 130 to 700 $m^2$/g and an OAN ranging from 150 mL/100 g to 300 mL/100 g; and

a binder.

Another embodiment provides a cathode formulation comprising, consisting essentially of, or consisting of:

a first lithium ion-based electroactive material having a particle size distribution of $1 \mu m \leq D_{50} \leq 5 \mu m$;

a second lithium ion-based electroactive material having a particle size distribution of $5 \mu m < D_{50} \leq 15 \mu m$; and

carbon black having BET surface area ranging from 130 to 700 $m^2/g$.

Another embodiment provides a cathode formulation comprising, consisting essentially of, or consisting of:

a first lithium ion-based electroactive material having a particle size distribution of $1 \mu m \leq D_{50} \leq 5 \mu m$;

a second lithium ion-based electroactive material having a particle size distribution of $5 \mu m < D_{50} \leq 15 \mu m$;

carbon black having BET surface area ranging from 130 to 700 $m^2/g$; and

a binder.

In one embodiment, the cathode formulation can take the form of a paste or slurry in which particulate electroactive material and carbon black are combined in the presence of a solvent. In another embodiment, the cathode formulation is a solid resulting from solvent removal from the paste/slurry.

In one embodiment, the formulation is a particulate cathode formulation. In one embodiment, "particulate" refers to a powder (e.g., a free-flowing powder). In one embodiment, the powder is substantially free of water or solvent, such as less than 10%, less than 5%, less than 3%, or less than 1% water or solvent.

In one embodiment, the carbon black is homogeneously interspersed (uniformly mixed) with the electroactive material, e.g., the lithium-ion based material. In another embodiment, the binder is also homogeneously interspersed with the carbon black and electroactive material.

Another embodiment comprises method of making a cathode, comprising:

combining particles comprising carbon black, a lithium ion-based electroactive material, and a binder in the presence of a solvent to produce a paste;

depositing the paste onto a substrate; and

forming the cathode,

wherein the electroactive material has a $D_{50}$ ranging from 1 $\mu m$ to 6 $\mu m$, and the carbon black has a BET surface area ranging from 130 to 700 $m^2/g$ and an OAN ranging from 150 mL/100 g to 300 mL/100 g.

Another embodiment comprises method of making a cathode, comprising:

combining particles comprising carbon black, a lithium ion-based electroactive material, and a binder in the presence of a solvent to produce a paste;

depositing the paste onto a substrate; and

forming the cathode,

wherein the lithium ion-based electroactive material comprises:

a first lithium ion-based electroactive material having a particle size distribution of $1 \mu m \leq D_{50} \leq 5 \mu m$; and

a second lithium ion-based electroactive material having a particle size distribution of $5 \mu m < D_{50} \leq 15 \mu m$.

In one embodiment, the one embodiment, the paste is the product of combining particles comprising electroactive material with carbon black and binder in the presence of a solvent. In one embodiment, the paste has a sufficiently high solids loading to enable deposition onto a substrate while minimizing the formation of inherent defects (e.g., cracking) that may result with a less viscous paste (e.g., having a lower solids loading). Moreover, a higher solids loading reduces the amount of solvent needed.

The particles can be combined in the solvent in any order so long as the resulting paste is substantially homogeneous, which can be achieved by shaking, stirring, etc. The particles can be formed in situ or added as already formed particles having the domain sizes disclosed herein. "Solvent" as used herein refers to one or more solvents. Exemplary solvents include e.g., N-methylpyrrolidone, acetone, alcohols, and water.

In one embodiment, the method comprises depositing the paste onto a substrate, such as a current collector (e.g., an aluminum sheet), followed by forming the cathode. In one embodiment, "forming the cathode" comprises removing the solvent. In one embodiment, the solvent is removed by drying the paste either at ambient temperature or under low heat conditions, e.g., temperatures ranging from 20° to 100°C. The method can further comprise cutting the deposited cathode/Al sheet to the desired dimensions, optionally followed by calendaring.

Another embodiment provides a cathode paste containing particles comprising a lithium ion-based electroactive material and a carbon black, wherein the paste further comprises:

a binder; and

a solvent,

wherein the electroactive material has a $D_{50}$ ranging from 1 $\mu$m to 6 $\mu$m, and the carbon black has a BET surface area ranging from 130 to 700 $m^2$/g and an OAN ranging from 150 mL/100 g to 300 mL/100 g.

Another embodiment provides a cathode paste containing particles comprising a first lithium ion-based electroactive material, a second lithium ion-based electroactive material, and a carbon black, wherein the paste further comprises:

a binder; and

a solvent,

wherein:

the first lithium ion-based electroactive material has a particle size distribution of 1 $\mu$m $\leq D_{50} \leq$ 5 $\mu$m;

the second lithium ion-based electroactive material has a particle size distribution of 5 $\mu$m $< D_{50} \leq$ 15 $\mu$m; and

the carbon black has BET surface area ranging from 130 to 700 $m^2$/g.

Another embodiment provides a cathode paste consisting essentially of or consisting of the lithium ion-based electroactive material(s), the carbon black, the binder, and the solvent.

One embodiment provides a cathode comprising the cathode formulation. The cathode can further comprise a binder and a current collector. In one embodiment, the active material is a high voltage cathode with the charging cut-off voltage of 4.95 V versus Li-metal reference electrode. In one embodiment, the cathode has a thickness of at least 10 $\mu$m, e.g., a thickness of at least 30 $\mu$m. Another embodiment provides an electrochemical cell comprising the cathode, such as a lithium ion battery.

In one embodiment, an electrochemical cell comprising the disclosed cathode materials provides one or more of improvements selected from power performance, energy performance, inertness toward carbon corrosion oxidation, inertness toward carbon and/or electrolyte oxidation, and improved percolation behavior.

## EXAMPLES

### Example 1

This Example describes the preparation of $LiNi_{0.33}Co_{0.33}Mn_{0.33}O_2$ by reactive spray technology, as described in U.S. Patent No. 6,770,226. The precursors were $Ni(NO_3)\cdot26H_2O$, $Co(NO_3)26H_2O$ (supplier), and Mn nitrate. Solutions were atomized by using either a 1.65 MHz submerged ultrasonic spray generator or air-assist nozzles to produce droplets that were carried by a carrier gas into a high-temperature reactor that can be heated internally or externally. The reactor temperature was varied from 600°C to over 1500°C by controlling reactor input energy and design. The residence times in the reactor zone varied from <100 ms to ~10 sec. The overall solution solids loading of the nickel, cobalt, manganese and lithium components was 5 wt. %. The as-produced active material powders were alternatively post-treated at a temperature of 900°C for 4 h under air atmosphere.

The crystal structure of the synthesized powders was carried out using X-ray diffractometry (XRD, Bruker D-8 Advance instrument) using Ni-filtered Cu-K*a* radiation at 40 kV / 40 mA, within 10-90 degrees 2-theta range. The analysis was performed using the TOPAS software and Rietveld's structure refinement method.

Powder morphology was studied using scanning electron microscopy (Hitachi S-5200 field emission SEM), generally operated at an accelerating voltage of 2.0 kV, coupled with a PGT EDS system and PGT Spirit software for elemental mapping and EDS.

BET surface area and porosity of each sample was measured by multi-point Nitrogen adsorption/desorption cycles in a Micromeritics Tristar 3000 apparatus. Each sample was first degassed in vacuum at 200°C for 2 hours. A UHP N2 gas was used in the measurement.

Particle size distribution analyses were performed on BlueWave particle size analyzer. A sample (0.20 g) is mixed with 50 ml D.I. water and 3 drops of Darvan C surfactant. The resulting solution is sonicated for 3 minutes with a Branson 450 before loading.

Unless described otherwise, electrode slurries were dispersed in NMP using a SPEX mill with two zirconia media for 30 minutes. The electrodes were dried at 80°C for ~ 15 minutes, then at least 4 h at 100°C under vacuum prior to coin-cell assembly in Ar-filled glove-box (MBraun). A constant mass loading of 9 mg/cm$^2$ corresponding to a capacity loading of ~1.5 mAh/cm$^2$ was used for all the electrochemical measurement reported herein. Electrodes were calendered to a thickness of ~40 microns resulting in porosity of 15-20%. 15 mm calendered cathode discs where tested in 2032 coin-cells (Hosen) versus lithium anode. Whatman GF/D fiberglass separator and EC-DMC-EMC-VC1%, LiPF$_6$ 1M electrolyte (Novolyte, < 20 ppm water) were used.

The initial charge/discharge capacities of the samples were measured through cycling in the 2.8-4.3 V potential range at a constant current density of 0.2 C. Capacity versus current curves were generated with constant current charging of C/2 then constant voltage of 4.3V with current cutoff of C/50, and discharge rates of C/5, C/2, 1C, 2C, 5C and in some cases 10C, 15C, 20C. The cycle performances of the cathode powders at an elevated temperature of 60°C were measured at a constant current density of 0.5 C. Electrochemical impedance measurements were performed on the coin-cells with an EG&G 2273 using PowerSine software, in the 1MHz-10 mHz range and 10 mV signal amplitude.

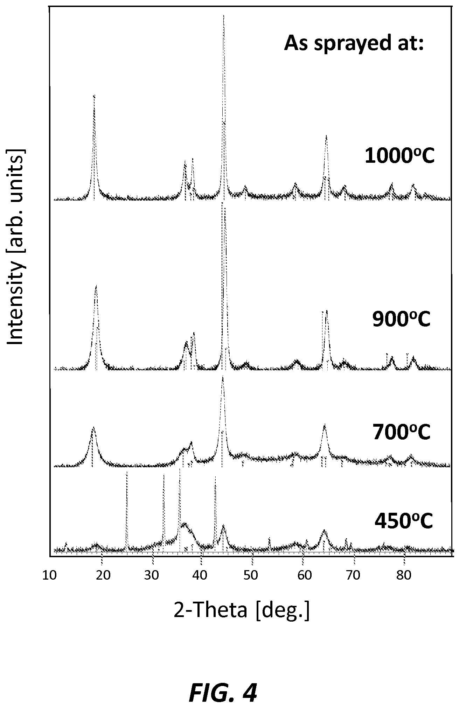

FIG. 4 shows XRD patterns for the resulting powders prepared by RST at different reactor temperatures using ultrasonic aerosol generation and in-line electrical heat source. For powders made at lower reactor temperature (450°C) decomposition of nitrate precursors was incomplete and a significant amount of the precursors remained undecomposed as determined by TGA analysis (not shown). Powders were also only partially converted into the right crystal phase, and resembled more a rock-salt phase instead of the crystal layered phase. For samples made at higher reactor temperatures, the XRD analysis and Rietveld refinement indicates a pure Li[Ni$_{1/3}$Co$_{1/3}$Mn$_{1/3}$]O$_2$ phase with no peaks from individual oxides. Based on the Rietveld analysis, materials made by RST belongs to the R-3m space group with lattice parameters a = 2.863 Å, c = 14.234 Å and an average grain size (from XRD) ranging from 46 nm for materials made at 700°C reactor temperature to 265 nm for powders made at 1000°C.

The powders prepared by RST had a morphology consisting of porous spherical particles formed by agglomeration of smaller particulate aggregates 20-50 nm in size. The particle size during the RST processing can be controlled by solution concentration, droplet size and other process parameters. Each droplet will become a particle and a simple correlation between process conditions and final particle size distribution was established. The results of physical characterization of as-sprayed materials (after RST step) are provided in Table 1.

**Table 1**

| Spray pyrolysis at | N2 BET SA | N2 BET Pore Volume (single point) | D$_{mean volume}$ | D$_{10}$ | D$_{50}$ | D$_{90}$ |
|---|---|---|---|---|---|---|
| | m$^2$/g | cc/g | microns | microns | microns | microns |
| 450°C | 23.5 | 0.054 | 1.704 | 0.585 | 1.293 | 3.364 |
| 700°C | 72.7 | 0.191 | 1.518 | 0.482 | 1.240 | 2.904 |
| 900°C | 31.8 | 0.141 | 1.444 | 0.322 | 1.174 | 2.884 |
| 1000°C | 20.5 | 0.106 | 1.126 | 0.252 | 1.064 | 1.984 |

Over the entire reactor temperature range, the surface area ranged from 20 to 70 m$^2$/g. From Table 1, it can be seen that the resulting spherical particles showed significant amounts of internal porosity by the total pore volume from single point N$_2$ BET adsorption measurements. All samples had particle size less than 4-5 $\mu$m, which is the typical lower limit of a co-precipitation process known in the art. In general, higher temperatures resulted in increased particle densification (as schematically shown in FIG. 1) and reduction in both particle size and internal porosity as shown in Table 1.

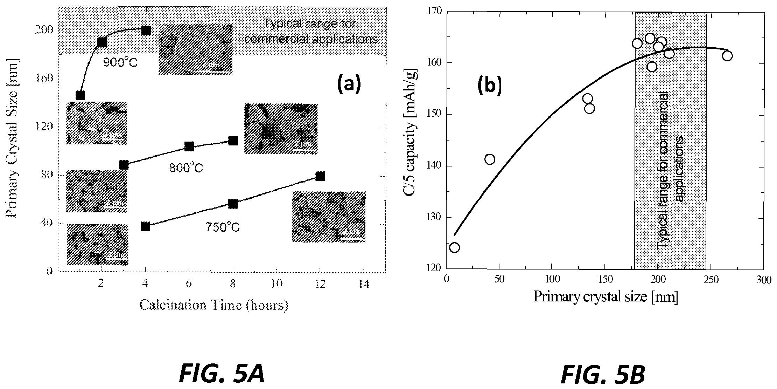

The crystallinity of the powders could be improved by increasing the reactor temperature and residence time, potentially opening possibility for one step continuous manufacturing process utilizing Reactive Spray Technology. One of the general attributes of the RST process is an intimate and homogenous precursor mixing (including Lithium) at the atomic level. The elemental components are in close proximity to one another, thus, not requiring long heat treatment steps to overcome slow solid state diffusion. This feature of materials made by using RST is expected to result in a shortening of the heat treatment step in cases where thermal post-treatment is needed. Moreover, the optional post treatment step can typically be performed at much lower temperatures due to the element mixing at the atomic level and short diffusion paths. The effect of calcination time and the calcination temperature on the size of the primary crystals is shown in FIG. 5A.

A correlation between the primary crystal size and the reversible Lithium capacity at C/5 rate is shown in FIG. 5B. It was found that C/5 electrochemical capacity of the electroactive powders increases with crystal size up to a value of ~165 mAh/g for crystal size of ~200 nm, but no further improvement was observed at larger crystal size. The optimal size of the primary crystals ranged from 180-220 nm for which the reversible capacity was maximized at ~165 mAh/g.

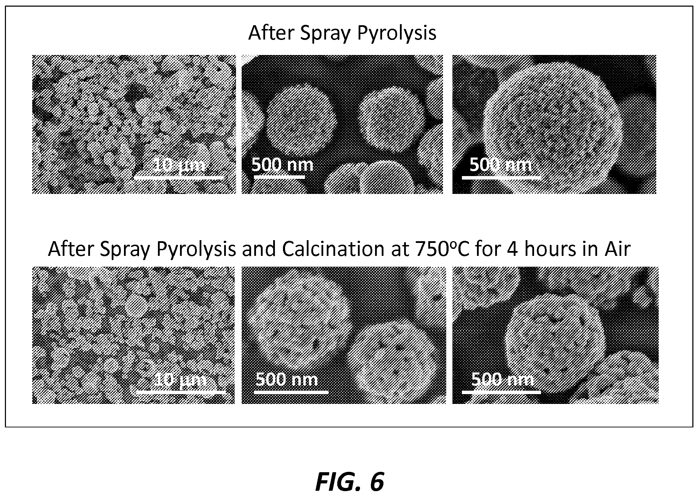

FIG. 6 shows SEM images at different magnification of material after the spray pyrolysis step (top, 700°C reactor temperature) and after additional calcination (bottom, 750°C for 4 hours in air). As can be seen from FIG. 6, particle size and morphology remained largely unchanged after the optional post-treatment step, which opens the possibility of unique powder morphologies. Higher magnification SEM images reveal that smaller aggregates within the particle were more crystalline after the post-treatment step. When calcination was conducted at 900°C, a desirable crystal size was achieved after only 2-4 hours, establishing the benefit of RST of significantly reducing post-treatment time.

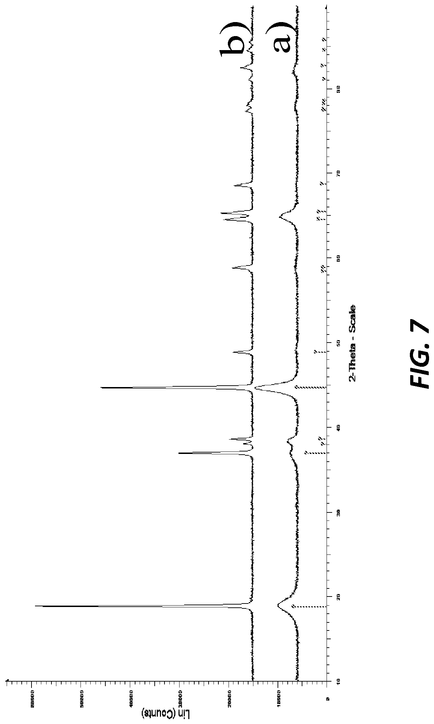

FIG. 7 shows XRD patterns of $LiCo_{0.33}Mn_{0.33}Ni_{0.33}O_2$: a) as sprayed at 700°C, and b) after calcination at 900°C for 2 hours in air. The theoretical XRD peaks are shown adjacent the x-axis. FIG. 7 indicates that the correct crystal phase was achieved after the RST step. Post-treatment therefore resulted only in improvement in crystallinity through the primary crystal growth. No crystalline impurities of any kind were detected after post-treatment. The Co: Mn: Ni ratio was virtually 1 with coefficients differences of +/- 0.01.

Basic physical properties of materials sprayed at 700°C reactor temperature before and after post-treatment at 900°C for 4 hours in air are shown in Table 2. For comparison, properties of powders made by co-precipitation method are also provided.

**Table 2**

| Material | $N_2$ BET SA | Pore volume from single point $N_2$ BET adsorption | $D_{10}$ | $D_{50}$ | $D_{90}$ |
|---|---|---|---|---|---|
| | $m^2/g$ | cc/g | microns | microns | microns |
| Sprayed at 700°C | 72.7 | 0.191 | 0.48 | 1.24 | 2.90 |
| Post-treated at 900°C for 4 hours in air | 2.05 | 0.0065 | 1.14 | 2.66 | 4.87 |
| Co-precipitation | 0.27 | 0.0013 | 5.74 | 10.93 | 18.72 |

The surface area of as sprayed material (72.7 $m^2/g$) was reduced to 2.05 $m^2/g$ after calcination at 900°C in air for 4 hours. The particle size increased somewhat, but the morphology overall remained very similar to the morphology of the starting as-sprayed powder. As previously shown in FIG. 5A, calcination at high temperature resulted in an increase in primary crystal size, which also reduces internal porosity within the spherical agglomerates. After additional heat treatment at 900°C for 4 hours, the porosity was reduced to only 3% of the porosity of the initial powder after the RST process step. However, the resulting porosity is still almost five times higher than the total porosity (i.e., pore volume) for $LiCO_{0.33}Mn_{0.33}Ni_{0.33}O_2$ powder made by co-precipitation method.

Without wishing to be bound by any theory, it can be expected that an increase in (electrochemically active) surface area combined with internal porosity should result in facilitated reaction kinetics and mass transport (i.e. ionic conductivity). The internal pores can act as "highways" for the electrolyte making it accessible to the entire electrochemically active surface area at rates significantly faster than if Li transport was taking place throughout the solid phase (i.e. in large, non-porous particles).

**Example 2**

This Example provides a comparison between electrodes comprising small particle active materials versus large particle active materials. Because the surface area of the small particle material is almost 10 times higher than the surface area of the large particle material, it was believed that such electrodes would result in a lower packing density in the electrode layer, and poorer cycle life especially at higher temperatures.

The small particle active material used in this Example was a powder of formula $LiNi_{0.33}Co_{0.33}Mn_{0.33}O_2$ made by the method described in Example 1 where RST processing was performed at 700°C and post-treated at 900°C in air for 4 hours. The large particle material was made by conventional co-precipitatation, available commercially. Table 3 lists the size and surface area properties for large and small particle size materials:

**Table 3**

| active material | $N_2$ BET SA ($m^2/g$) | $D_{mv}$ (μm) | $D_{50}$ (μm) | D95 (μm) |
|---|---|---|---|---|
| "large" | 0.3 | 1.2 | 11 | 22 |
| "small" | 2.5 | 2 | 1.7 | 4.5 |

Both morphologies were tested independently to determine their baseline performance. Electrochemical performance was evaluated in 2032 coin cell configuration. The working electrode/cathode consisted of active material (AM), binder (PVDF), and carbon black (CB, LITX200H™, available from Cabot Corporation) in the ratio given in the Table 4 below. Cathode loading was 1.5 mAh/cm$^2$, assuming 150 mAh/g capacity of electroactive material. The counter electrode was Li-metal. Further details of the electrode formulation and electrochemical test configuration are provided in Table 4.

**Table 4**

| Cell Configuration | Coin Cell 2032 |
|---|---|
| Anode | Li-Metal |
| Cathode | AM:CB:Binder = 94:3:3 (small); 98:1:1 (large) |
| Cathode Loading | 1.5 mAh/cm$^2$ |
| Electrolyte | EC-DMC-EMC (1:1:1); VC 1%, 1M $LiPF_6$ |
| Temperature | 25°C |

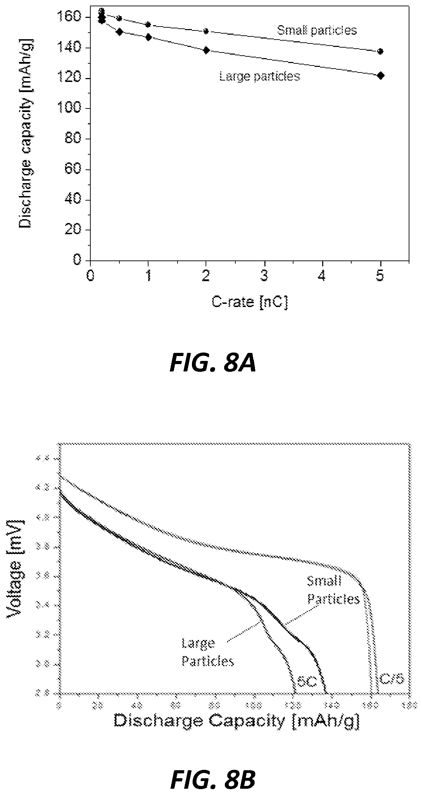

FIG. 8A is a plot of discharge capacity versus C rate for electrodes containing small and large size active materials. FIG. 8B is a plot of voltage versus discharge capacity. As can be seen from FIGs. 8A and 8B, cathodes comprising small particle active materials provide better power performance.

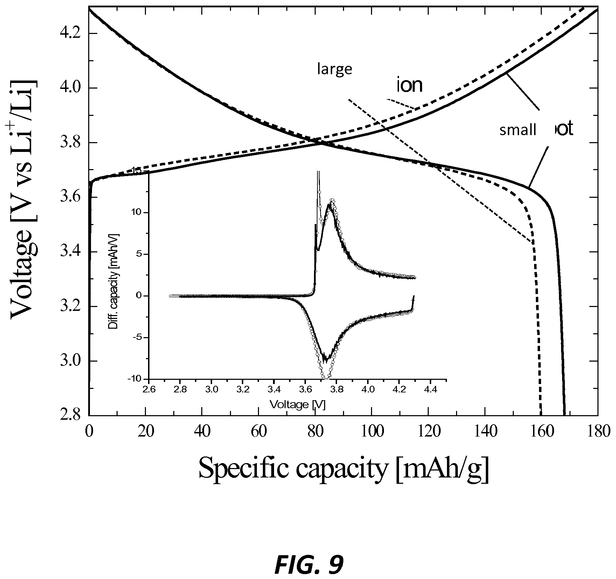

FIG. 9 shows first C/5 charge-discharge voltage profiles and their derivatives (inset) of the small particle (solid lines) and large particle active materials (dotted lines). The C/5 voltage profile of the small particle active material is similar to the one of the large particle material but with a higher capacity, typically in the range 165-168 mAh/g versus 159-160 mAh/g for the large particle material. The derivative of voltage profiles are similar, with one pair of reversible peaks below 4V vs. Li$^+$/Li, indicating that same redox couple ($Ni^{2+}/Ni^{4+}$) is active in both cases.

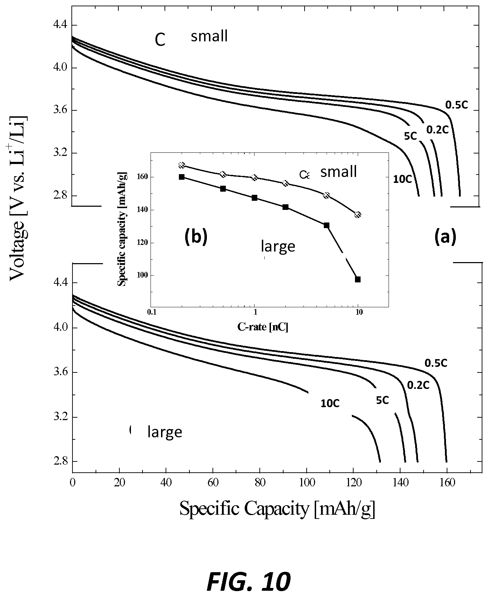

FIG. 10 shows (a) discharge curves at different rates for the small particle and large particle materials, and (b) specific capacity as a function of discharge rate (C-rate). The active phase loading was 1.5 mAh/cm$^2$. The shape of the curves is similar for both materials, including a similar voltage profile in the initial stages of Li intercalation into the active material. This indicates a similar resistance to electron flow and further confirms that optimal loading of conductive additive depends on the morphology of the active material. The differences in polarization curves between the two are amplified in the later stages of discharge, dominantly under the influence of mass transport limitations in the electrode layer. The capacity vs. C-rate plot (b) shows the benefit of small particle materials. While the capacity of 137 mAh/g at 10C discharge rate is maintained in electrodes utilizing the small particle materials, the large particle materials at the same electrode loading is only delivering 97 mAh/g. Thus, a greater than 40% improvement is achieved with the small particle material.

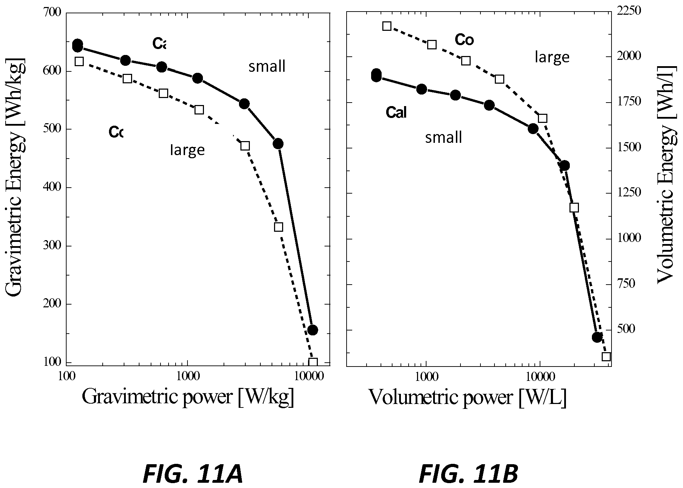

FIGs. 11A and 11B show gravimetric (11A) and volumetric (11B) Ragone plots of energy vs. power for the large and small particle materials. Based on the mass normalized Ragone plot of FIG. 11A, the small particle material demonstrates superior energy density in the entire power range. Volume normalized energy and power density also depends on the electrode density, which in turn depends on the function of the packing properties of the active material powder. Because smaller particles result in a reduction in electrode density, under similar calendering pressure the electrode density of 2.95 g/cc was achieved with the small particle material, compared to 3.52 g/cc obtained with the large particle material.

From the volume normalized Ragone plot of FIG. 11B, the penalty for low electrode density can be seen at low power. However, at higher power the gap in energy density is reduced and above a certain value it is fully closed. After that point, small and large particle materials have similar volumetric energy density. This trend demonstrates the benefit of small particles of active phase in high power applications. When very high discharge power is required, an improvement in rate capability of small particles more than compensates for lower packing density resulting in volumetric energy and power density on par with large particles of active phase, while still offering almost 50% improvement in gravimetric energy density. Lower electrode density is also indirect evidence for higher electrode porosity in small partiles materials responsible for better capacity retention at high discharge current.

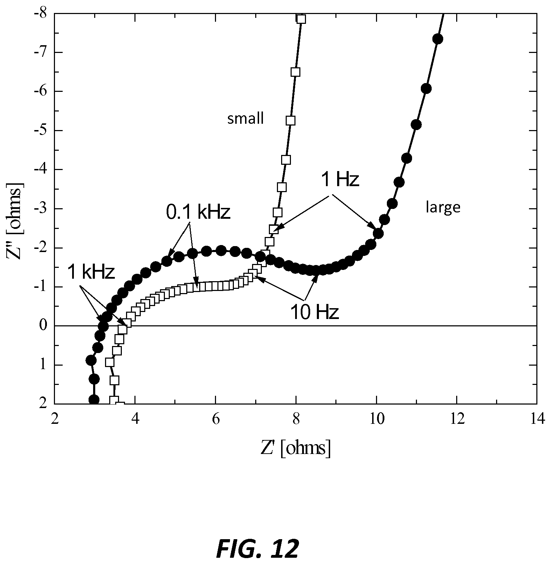

FIG. 12 shows electrochemical impedance spectra of formed and discharged coin-cells with either large or small sized particles measured in 1MHz to 1mHZ frequency range with a signal amplitude of 10 mV (coin-cell area = 1.77 cm$^2$). In the discharged state, three main features can be observed: (1) a high frequency intercept with the real axis, which is indicative of electrolyte resistance (a constant identical for both coin-cells) plus electronic resistance of the electrode, and a charge transfer semi-circle, which is indicative of mass transport kinetics through the electrode; (2) at lower frequencies, Warburg diffusion then double-layer capacitance are observed, which reflects the blocking nature of the electrodes in the discharged state -- in the case of small particle active materials, higher electronic resistance is observed because smaller particles have higher number of inter-particle connections; and (3) smaller charge transfer resistance is observed, attributed to the faster ionic diffusion of lithium ions inside the smaller porous particles made by RST. The latter feature results in the higher discharge rate capability observed with the small particle active materials.

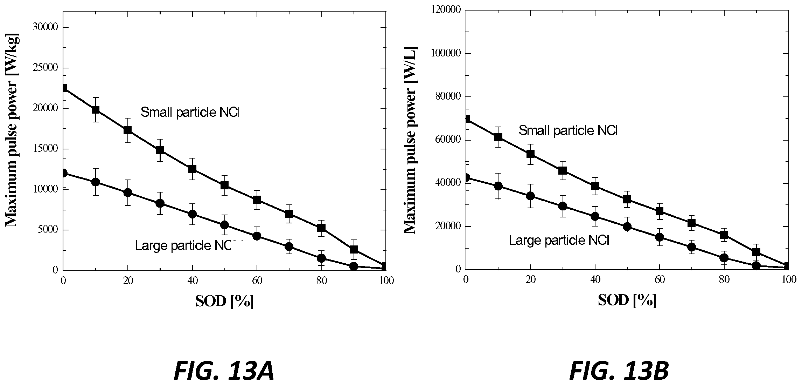

FIGs. 13A and 13B are plots, obtained from an HPPC test, of maximum pulse power versus State of Discharge (SOD) equal to 1 - SOC (State of Charge), both mass (13A, gravimetric) and volume (13B, volumetric) normalized. The HPPC test was performed as described in "Battery Test Manual for Plug-In Hybrid Electric Vehicles," Revision 0 (March 2008) published by U.S. Department of Energy, Vehicle Technologies Program. Discharge pulse was 5C for 10 seconds, while charge pulse was 3.75C for 10 second duration. From FIGs. 13A and 13B, it can be seen that small particle active materials are superior in delivering power from the cell in the entire range of state of discharge (SOD). The process of storing and releasing energy during the battery charge and discharge involves diffusion of Li inside the solid particles of electroactive material. Considering that solid state diffusion is typically much slower than diffusion of Li$^+$ ions in the electrolyte phase, this causes small particles active materials to be better suited for power demanding applications.

## Example 3

This Example describes active materials comprising nickel-doped Mn spinels, a layer-layer Mn rich compositions, and their blends. All powders were prepared from an aqueous solution of nitrate precursors of Co, Ni, Mn and Li via RST, as described herein.

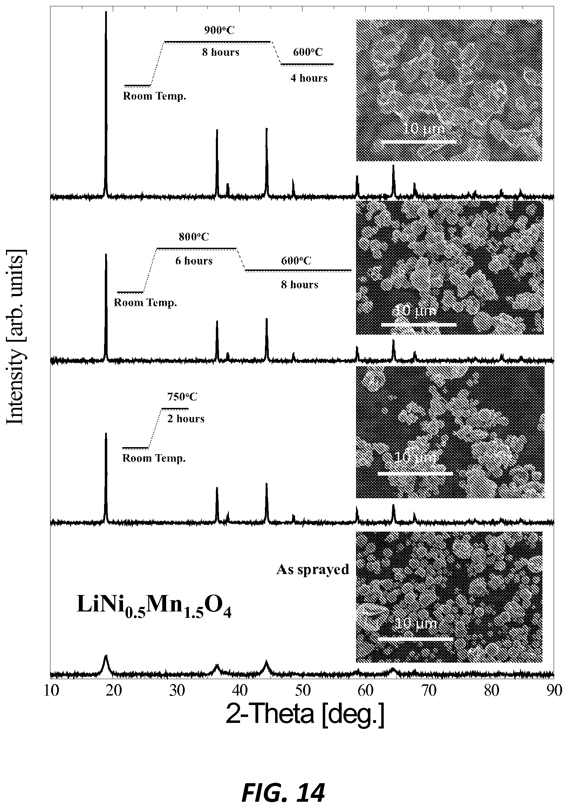

The as-sprayed spinel consists of spherical particles of ~1.5 $\mu$m D$_{50}$ diameter, and a BET surface area of 45 m$^2$/g. Calcination was performed in air at 750°C/2hr, or 800°C/6hr then 600°C/8hr or 900°C/8hr then 600°C/4hr. In the two step calcination, the second step is intended to recover oxygen lost at higher temperature in order to prevent the formation of oxygen deficient spinel. The left hand side of FIG. 14 shows XRD spectra of the spinel annealed at various temperatures. The right hand side of FIG. 14 shows the corresponding SEM images. FIG. 14 shows that the pure spinel phase is obtained directly as-sprayed at 750°C, but crystallinity is significantly improved by calcination. Rietveld refinement of a sample annealed at 900°C/8hr then 600°C/4hr indicates a primary crystal size of 187 nm, and lattice parameter a = 8.171 Angstroms. The BET surface area drops to 0.71 m$^2$/g at the 900°C calcination temperature. SEM observation of the particles at various calcination temperatures reveals that the spherical morphology is preserved up to 800°C, but larger faceted crystals typical of spinel cathode materials are formed at 900°C. As-sprayed particles show some deflated spheres indicative of the rapid drying of droplets in the reactor. After calcination, the powders formed large hard aggregates.

Mn rich layer-layer samples of formula Li$_{1.2}$Ni$_{0.2}$Mn$_{0.6}$O$_2$, Li$_{1.2}$Ni$_{·0.3}$Mn$_{0.6}$O$_{2.2}$ and Li$_{1.2}$Ni$_{0.133}$Co$_{0.133}$Mn$_{0.533}$O$_2$ were prepared via ultrasonic spray pyrolysis from nitrate solutions of their metallic components. The as-sprayed powders had BET surface areas ranging from 84 to 62 m$^2$/g, and D$_{50}$ particle diameters of ~1.6 $\mu$m. After calcination, their BET surface areas dropped to less than 7 m$^2$/g and primary crystal sizes attained 75 nm for 16h calcination at 900°C. The D$_{50}$ particle size only increased to 4 $\mu$m in the case of Li$_{1.2}$Ni$_{0.2}$Mn$_{0.6}$O$_2$. In the case of Co-doped formulations, a smaller BET surface area of 2.9 m$^2$/g and a larger primary crystal size of 142 nm was observed after 16h calcination at 900°C

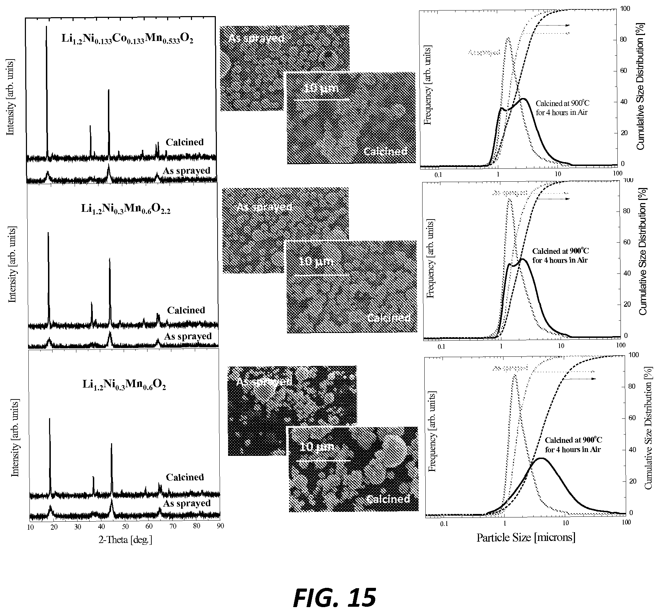

The left hand side of FIG. 15 shows XRD spectra of the as-sprayed powders and after 900°C/4h calcination, indicating that pure phases are obtained directly after spraying whereas a calcination step is necessary to increase crystallinity. The middle portion of FIG. 15 has a series of SEM images of the samples before and after 900°C/4h calcination, showing a spherical morphology that is preserved after calcination. Unlike the spinel, calcination does not result in significant aggregation of particles, and the as-sprayed particle size distribution is preserved after calcination, as seen in the right hand side of FIG. 15. As such, Mn-rich layer-layer powders could be incorporated directly into electrodes without any additional powder processing step.

Electrodes were prepared by mixing 82 wt.% active materials, 5 wt.% Super P® conductive carbon black (TIMCAL Graphite and Carbon), 5 wt.% SFG6 graphite and 8 wt.% PVDF in NMP Solef 1031 using a Spex mill with two zirconia media for 30 min. Active materials were either $0.5Li_2MnO_3 \cdot 0.5Li[NiMnCo]_{1/3}$ (layer-layer, $D_{50}$ = 2.1 $\mu$m), $LiNi_{0.5}Mn_{1.5}O_4$ (Spinel, $D_{50}$ = 1.5 $\mu$m), or a 1:1 mixture by weight of the two cathode powders. Slurries were doctor blade coated on Al foil (17 $\mu$m thickness) and dried at 80°C. The final active loading was 7.9 mg/cm$^2$. They were calendered and assembled into 2032 coin-cells using Li foil counter electrode and EC: DMC: EMC 1:1:1, VC1 %, LiPF6 1M electrolytes. Cells were tested for capacity at various C-rates of discharge current in the same voltage range 2.0-4.8V

The initial charge/discharge capacities of the samples were measured in the 2.8-4.8 V potential range for spinel and 2.0-4.8 V potential range for layer-layer compositions. For layer-layer samples, the charging rate was C/10 to 4.8V, and discharging rates were 0.1C, 0.2C, 0.4C, 0.8C, 1.6C and 3.2C with 1C discharge nominal capacity set to 250 mA/g. The cycle performances of the cathode powders at room temperature of 25°C were measured at a constant current density of 0.5 C. Typically, four identical coin-cells per sample were measured to ensure data reproducibility, and the best of four is reported.

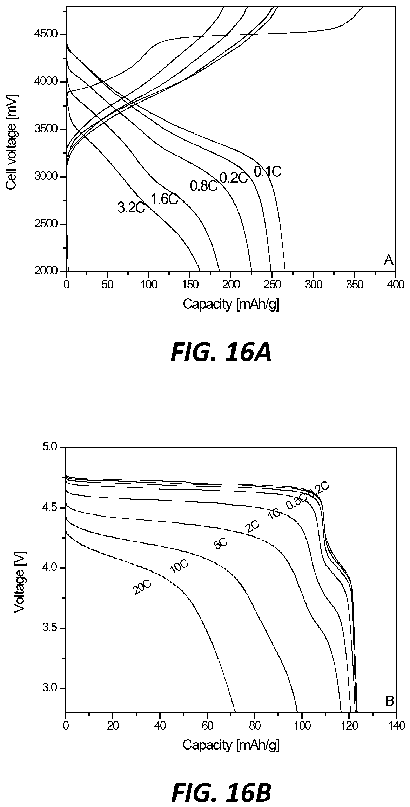

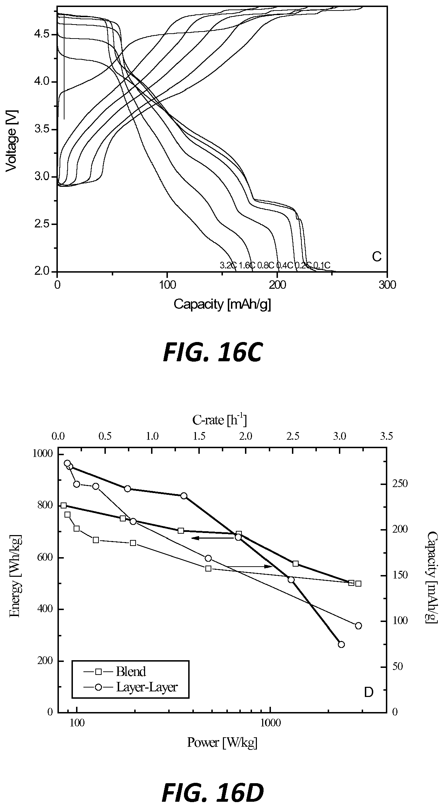

FIGs. 16A and 16B show that the layer-layer material has a higher capacity but a lower C-rate capability than the spinel. The 1:1 mixture of both display higher initial discharge voltage and lower capacity loss with C-rate (FIG. 16C). When plotting energy vs. power, the advantage of the mixture is captured: at slow discharge rate (0.1C) the blend has a specific energy of 801 Wh/kg versus 952 Wh/kg for the standalone layer-layer. This is caused by the lower specific capacity of 217 mAh/g versus 273 mAh/g for the standalone layer-layer. However at faster discharge rate of 3.2C, the blend has specific energy of 502 Wh/kg versus 264 Wh/kg for the standalone layer-layer cathode. At that rate, the capacity is 141 mAh/g which is similar to $LiCoO_2$, while it is down to 95 mAh/g for the standalone layer-layer cathode (FIG. 16D).

## Example 4

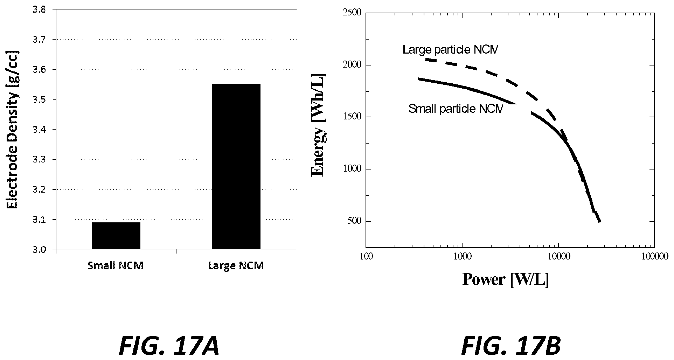

While cathodes incorporating small particle active materials can yield many improvements, as illustrated in Examples 1-3, certain applications may not benefit from the sole use of small particle materials. The electrochemical performance and electrode thickness after full calendaring was measured and used to calculate electrode density. FIG. 17A is a bar plot showing composite electrode density for the small and large particle active materials of Example 2. FIG. 17B is a plot of volumetric energy and power density of electrodes comprising small and large particle active materials. Smaller particles pack less densely, which in turn result in composite electrodes having lower densities compared to electrodes made from larger particles. When volumetric capacity is calculated by multiplying mass normalized energy with electrode density, larger active material particles produced in superior volumetric energy density, as demonstrated by FIG. 17B.

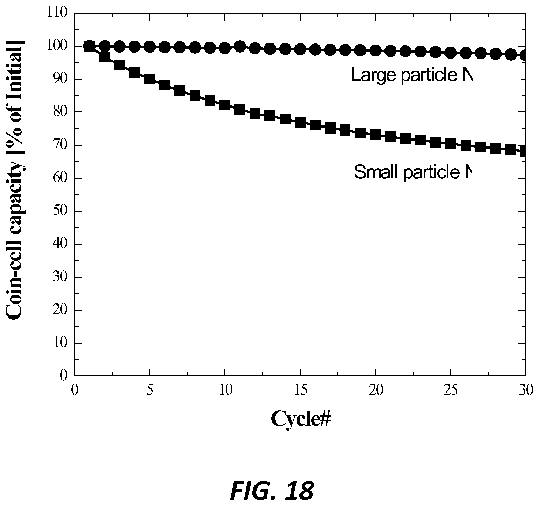

The electrodes were cycled at room temperature. FIG. 18 shows the results of cycling performance with a plot of capacity versus cycle number. While the initial 30 cycles for the large particle electrode did not show any signs of capacity fade, the electrode containing small particle active material showed a more pronounced decline and after 30 cycles they retained only 65% of their initial capacity. The problem of capacity deterioration with small particle active materials can be alleviated to some degree by controlling the upper cut-off voltage, i.e. SOC range, in which the active material is cycled. Thus, small particle active materials are typically used in partial state of charge applications, e.g., in HEV applications where the battery is cycled in a narrow state of charge window -- below 100% to enable high discharge rates and regenerative power recovery.

Accordingly, this Example describes the preparation and testing of cathode formulations comprising blends of the small particle and large particle active materials described in Examples 1 and 2.

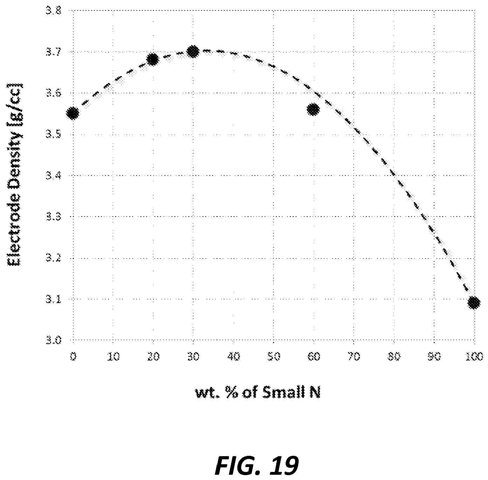

FIG. 19 is a plot of electrode density as a function of wt% small particle active material after full calendaring. The loading of small particle active material (wt% with respect to total weight of small and large particle active material) is varied from 0% to 100%, where 0 wt% represents a large particle-only formulation, and 100 wt% represents a small particle-only formulation. It can be seen that as the weight % of small particle size active material increases, the overall electrode density increases. Without wishing to be bound by any theory, it is believed that the density increase is due to the packing of smaller particles in voids created by the packing of larger particles. The small particles minimally distribute the packing density of the large particles while adding active mass in the void space between those particles. However, the void volume created by larger particles is limited and determined by random packing of spherical particles. At higher volume fractions, the small particles cannot be accommodated and may even disrupt the packing density of larger particles, resulting in a decrease in electrode density after achieving a maximum value. As seen in FIG. 19, for $LiNi_{0.33}CO_{0.33}Mn_{0.33}O_2$ particles having the size as listed in Table 3, blending 40% by weight of small particle active material with 60% by weight of large particle material achieves a greater electrode density compared to the large particle-only formulation. Moreover, the resulting composite electrode has an electrochemically active surface area of 1.62 $m^2$/g compared to 0.3 $m^2$/g with a large particle-only formulation. This increased surface area is expected to be beneficial for power performance.

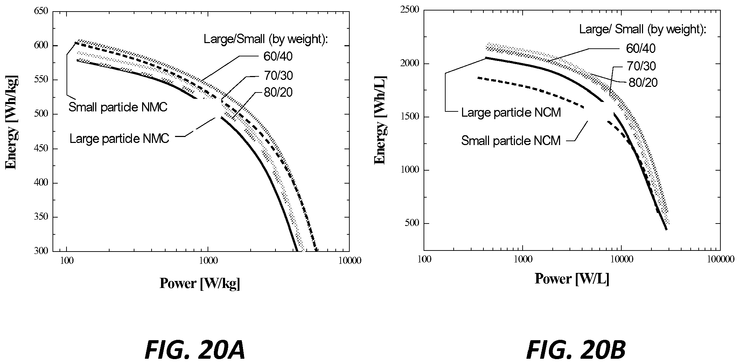

FIGs. 20A and 20B show mass normalized (20A) and volume normalized (20B) Ragone plots for pure small and large particle cathode formulations and their blends and the effect on power performance, i.e. gravimetric energy and power density. The power performance value is indicative of active material utilization, which in turn is a function of the size of active particles. All blends show performance between energy/ power performance of either large or small particle materials, and depending on the blending ratio they are closer to one or the other. The blend of 60/40 large/small particle blend showed improved gravimetric energy and power density over both grades individually, a result that was unexpected and surprising. When mass normalized energy and power density is multiplied with electrode density to obtain volumetric energy and power density, the benefits of the blending approach can be seen.

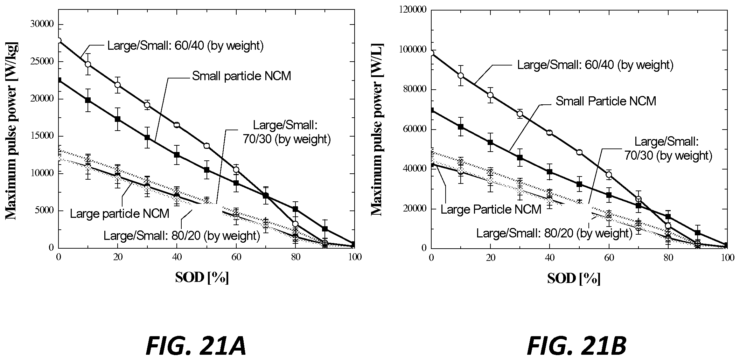

All blends show improvement in both volume normalized energy and power over respective pure grades. FIGs. 21A and 21B show plots of mass normalized (21A) and volume normalized (21B) maximum discharge power obtained from pulsed HPPC tests as a function of State of Charge (SOC). Unexpected behavior observed in continuous discharge was confirmed and even magnified when maximum discharge power rate was measured during a pulsed (HPPC) discharge regime. In this case there is obviously a synergistic effect seen with the blended formulation that surpasses the performance of either of them individually. This benefit is even more magnified after electrode volume normalization of energy and power performance.

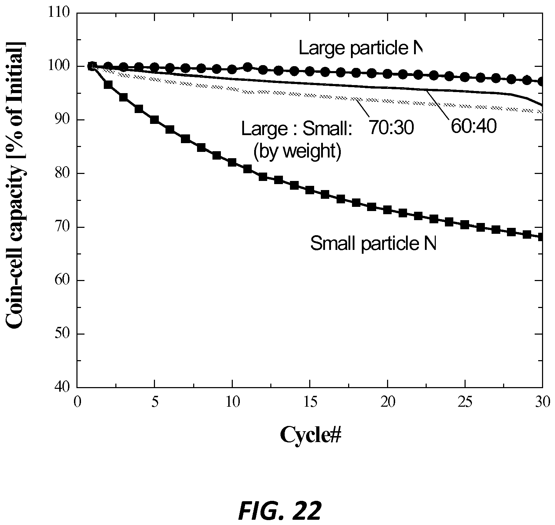

The impact of the blends on cycle life performance was evaluated; this data is plotted in FIG. 22, which shows coin-cell capacity (% of initial) as a function of cycle number. All blends showed a cycle life performance significantly better than that of the small particle formulation and comparable to that of the large particle formulation.

In summary, the use of blends results in improved volumetric energy and power density, with specific blending ratio resulting in synergy that ultimately increased gravimetric energy and power in addition to volumetric energy and power density. All blends resulted in cycle life performance comparable to more stable large particle morphology, thus enabling applications utilizing full depth of discharge.

The use of the terms "a" and "an" and "the" are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

**Claims**

1. A cathode formulation comprising:

   a first lithium ion-based electroactive material having a particle size distribution of 1 $\mu$m $\leq D_{50} \leq$ 5 $\mu$m;
   a second lithium ion-based electroactive material having a particle size distribution of 5 $\mu$m $< D_{50} \leq$ 15 $\mu$m; and
   carbon black having BET surface area ranging from 130 to 700 $m^2$/g, an OAN ranging from 100 mL/100 g to 300 mL/100 g, and a surface energy less than or equal to 10 mJ/$m^2$ .

2. The cathode formulation of claim 1, wherein the first electroactive material has a particle size distribution of 1 $\mu$m $\leq D_{50} \leq$ 5 $\mu$m, and the second electroactive material has a particle size distribution of 6 $\mu$m $\leq D_{50} \leq$ 15 $\mu$m.

3. The cathode formulation of claim 1 or 2, wherein the first electroactive material has a pore size of less than 15 nm.

4. The cathode formulation of any one of claims 1 to 3, wherein the first electroactive material has a single point adsorption total pore volume of at least 0.002 $cm^3$/g.

5. The cathode formulation of any one of claims 1 to 4, wherein a spherical radius of the second electroactive material particle is less than or equal to 0.4 the spherical radius of the first electroactive material particle.

6. The cathode formulation of any one of claims 1 to 5, wherein the carbon black is present in the formulation in an amount ranging from 0.1% to 10% by weight, relative to the total weight of the formulation.

7. The cathode formulation of any one of claims 1 to 6, wherein the carbon black has a crystallinity ($I_D/I_G$) of at least 25%, as determined by Raman spectroscopy.

8. The cathode formulation of any one of claims 1 to 7, wherein the carbon black has a crystallite size ($L_a$) of at least 30 Å, as determined by Raman spectroscopy.

9. The cathode formulation of any one of claims 1 to 8, wherein the first and second electroactive materials are present in the cathode formulation in a sum of at least 80% by weight, relative to the total weight of the cathode formulation.

10. The cathode formulation of any one of claims 1 to 9, wherein the carbon black is a heat-treated carbon black.

11. The cathode formulation of any one of claims 1 to 10, wherein the second electroactive material is present in an amount ranging from 10 wt% to 50 wt%, relative to the total weight of the electroactive material.

12. The cathode formulation of any one of claims 1 to 11, wherein the carbon black is homogeneously interspersed with the lithium-ion based material.

**Patentansprüche**

1. Kathodenformulierung umfassend:

ein erstes elektroaktives Material auf Lithiumionenbasis mit einer Teilchengrößenverteilung von 1 $\mu$m $\leq$ D$_{50}$ $\leq$ 5 $\mu$m;
ein zweites elektroaktives Material auf Lithiumionenbasis mit einer Teilchengrößenverteilung von 5 $\mu$m < D$_{50}$ $\leq$ 15 $\mu$m; und
Carbon-Black mit einer BET-Oberfläche im Bereich von 130 bis 700 m$^2$/g, einer OAN im Bereich von 100 ml/100 g bis 300 ml/100 g und einer Oberflächenenergie von weniger als oder gleich 10 mJ/m$^2$.

2. Kathodenformulierung nach Anspruch 1, wobei das erste elektroaktive Material eine Teilchengrößenverteilung von 1 $\mu$m $\leq$ D$_{50}$ $\leq$ 5 $\mu$m aufweist und das zweite elektroaktive Material eine Teilchengrößenverteilung von 6 $\mu$m $\leq$ D$_{50}$ $\leq$ 15 $\mu$m aufweist.

3. Kathodenformulierung nach Anspruch 1 oder 2, wobei das erste elektroaktive Material eine Porengröße von weniger als 15 nm aufweist.

4. Kathodenformulierung nach einem der Ansprüche 1 bis 3, wobei das erste elektroaktive Material ein Einpunkt-Adsorptions-Gesamtporenvolumen von wenigstens 0,002 cm$^3$/g aufweist.

5. Kathodenformulierung nach einem der Ansprüche 1 bis 4, wobei ein Kugelradius des zweiten elektroaktiven Materialteilchens weniger als oder gleich 0,4 des Kugelradius des ersten elektroaktiven Materialteilchens ist.

6. Kathodenformulierung nach einem der Ansprüche 1 bis 5, wobei das Carbon-Black in der Formulierung in einer Menge im Bereich von 0,1 bis 10 Gew.-%, bezogen auf das Gesamtgewicht der Formulierung, vorhanden ist.

7. Kathodenformulierung nach einem der Ansprüche 1 bis 6, wobei das Carbon-Black eine Kristallinität ($I_D/I_G$) von wenigstens 25 %, bestimmt durch Raman-Spektroskopie, aufweist.

8. Kathodenformulierung nach einem der Ansprüche 1 bis 7, wobei das Carbon-Black eine Kristallitgröße ($L_a$) von wenigstens 30 Å, bestimmt durch Raman-Spektroskopie, aufweist.

9. Kathodenformulierung nach einem der Ansprüche 1 bis 8, wobei die ersten und zweiten elektroaktiven Materialien in der Kathodenformulierung in einer Summe von wenigstens 80 Gew.-%, bezogen auf das Gesamtgewicht der Kathodenformulierung, vorhanden sind.

10. Kathodenformulierung nach einem der Ansprüche 1 bis 9, wobei das Carbon-Black ein wärmebehandeltes Carbon-Black ist.

**11.** Kathodenformulierung nach einem der Ansprüche 1 bis 10, wobei das zweite elektroaktive Material in einer Menge im Bereich von 10 Gew.-% bis 50 Gew.-%, bezogen auf das Gesamtgewicht des elektroaktiven Materials, vorhanden ist.

**12.** Kathodenformulierung nach einem der Ansprüche 1 bis 11, wobei das Carbon-Black mit dem Material auf Lithiumionenbasis homogen durchsetzt ist.

**Revendications**

**1.** Formulation de cathode comprenant :

un premier matériau électroactif à base d'ions lithium ayant une distribution de taille de particule de 1 $\mu$m $\leq D_{50}$ $\leq 5$ $\mu$m ;
un second matériau électroactif à base d'ions lithium ayant une distribution de taille de particule de $\leq \mu$m $< D_{50}$ $\leq 15$ $\mu$m ; et
du noir de carbone ayant une surface superficielle BET dans la plage de 130 à 700 m$^2$/g, un OAN dans la plage de 100 ml/100 g à 300 ml/100 g, et une énergie de surface inférieure ou égale à 10 mJ/m$^2$.

**2.** Formulation de cathode selon la revendication 1, dans laquelle le premier matériau électroactif a une distribution de taille de particule de 1 $\mu$m $\leq D_{50} \leq 5$ $\mu$m, et le second matériau électroactif a une distribution de taille de particule de 6 $\mu$m $\leq D_{50} \leq 15$ $\mu$m.

**3.** Formulation de cathode selon la revendication 1 ou 2, dans laquelle le premier matériau électroactif a une taille de pore inférieure à 15 nm.

**4.** Formulation de cathode selon l'une quelconque des revendications 1 à 3, dans laquelle le premier matériau électroactif a un volume poreux total d'adsorption localisée d'au moins 0,002 cm$^3$/g.

**5.** Formulation de cathode selon l'une quelconque des revendications 1 à 4, dans laquelle un rayon sphérique de la particule du second matériau électroactif est inférieur ou égal à 0,4 fois le rayon sphérique de la particule du premier matériau électroactif.

**6.** Formulation de cathode selon l'une quelconque des revendications 1 à 5, dans laquelle le noir de carbone est présent dans la formulation selon une quantité dans la plage de 0,1 % à 10 % en poids, par rapport au poids total de la formulation.

**7.** Formulation de cathode selon l'une quelconque des revendications 1 à 6, dans laquelle le noir de carbone a une cristallinité ($I_D/I_G$) d'au moins 25 %, comme déterminé par spectroscopie Raman.

**8.** Formulation de cathode selon l'une quelconque des revendications 1 à 7, dans laquelle le noir de carbone a une taille de cristallite ($L_a$) d'au moins 30 Å, comme déterminé par spectroscopie Raman.

**9.** Formulation de cathode selon l'une quelconque des revendications 1 à 8, dans laquelle les premier et second matériaux électroactifs sont présents dans la formulation de cathode selon une somme d'au moins 80 % en poids, par rapport au poids total de la formulation de cathode.

**10.** Formulation de cathode selon l'une quelconque des revendications 1 à 9, dans laquelle le noir de carbone est du noir de carbone traité thermiquement.

**11.** Formulation de cathode selon l'une quelconque des revendications 1 à 10, dans laquelle le second matériau électroactif est présent selon une quantité dans la plage de 10 % en poids à 50 % en poids, par rapport au poids total du matériau électroactif.

**12.** Formulation de cathode selon l'une quelconque des revendications 1 à 11, dans laquelle le noir de carbone est entremêlé de manière homogène avec le matériau à base d'ions lithium.

**FIG. 1**

FIG. 2

**FIG. 3**

EP 3 011 619 B1

FIG. 4

FIG. 5B

FIG. 5A

*FIG. 6*

**FIG. 7**

**FIG. 8A**

**FIG. 8B**

FIG. 9

FIG. 10

FIG. 11B

FIG. 11A

**FIG. 12**

*FIG. 13B*

*FIG. 13A*

FIG. 14

**FIG. 15**

**FIG. 16A**

**FIG. 16B**

**FIG. 16C**

**FIG. 16D**

**FIG. 17B**

**FIG. 17A**

**FIG. 18**

**FIG. 19**

**FIG. 20B**

**FIG. 20A**

*FIG. 21B*

*FIG. 21A*

40

FIG. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6770226 B

**Non-patent literature cited in the description**

- **GRUBER et al.** Raman studies of heat-treated carbon blacks. *Carbon,* 1994, vol. 32 (7), 1377-1382

- Battery Test Manual for Plug-In Hybrid Electric Vehicles. U.S. Department of Energy, Vehicle Technologies Program, March 2008